# EUROPÄISCHE PATENTANMELDUNG

(11) **EP 4 837 671 A1**
(43) Veröffentlichungstag der Anmeldung: **11.11.2026**
(21) Anmeldenummer: 25175039.4
(22) Anmeldetag: 08.05.2025
(51) Int. Cl.: B21D 22/02, B21D 28/02, B21D 53/88

(54) **FLANSCHPLATTE UND VERFAHREN ZUR HERSTELLUNG EINER FLANSCHPLATTE**

(71) Anmelder: Benteler Automobiltechnik GmbH, 33102 Paderborn (DE)
(72) Erfinder: Fortmeier, Günter, 33129 Delbrück (DE); Klandt, Michael, 32049 Herford (DE); Schröder, Aloys, 33100 Paderborn (DE); Schultz, Erik, 33102 Paderborn (DE)
(74) Vertreter: Ksoll, Peter

(57) **Zusammenfassung**

Die Erfindung betrifft eine Flanschplatte (5) und ein Verfahren zur Herstellung einer Flanschplatte (5), insbesondere eine Flanschplatte (5) für ein Kraftfahrzeug.. Die Flanschplatte (5) besitzt eine Wandstärke zwischen 8 mm und 16 mm. Die Flanschplatte (5) weist eine stanztechnisch erzeugte Außenkontur (11) und/oder eine stanztechnisch erzeugte Innenkontur (12) auf. Die Flanschplatte (5) kann zumindest einen gegenüber einer Plattenseite (6) der Flanschplatte (5) vorstehenden Ansatz (7) sowie zumindest einen Stanzabschnitt (10) aufweisen. Der Ansatz (7) ist durch Druckumformen werkstoffeinheitlich einstückig an der Flanschplatte (5) ausgebildet. Der Stanzabschnitt (10) kann eine Außenkontur (11) oder eine Innenkontur (12) der Flanschplatte (5) bilden. Erfindungsgemäß erfolgt die Druckumformoperation bei einer Druckumformtemperatur (T1), die höher ist als die Stanztemperatur (T2) bei der die Stanzoperation durchgeführt wird. Besonders vorteilhaft ist die die Druckumformtemperatur (T1) größer als 700° C, wohin gegen die Stanztemperatur (T2) unterhalb von 700° C liegt.

## Beschreibung

Die Erfindung betrifft eine Flanschplatte aus Stahl sowie ein Verfahren zur Herstellung einer Flanschplatte.

Flanschplatten dienen dazu, verschiedene Komponenten miteinander zu verbinden oder zu stützen. Typischerweise haben Flanschplatten Löcher, Gewinde sowie Ansätze, die es ermöglichen die Flanschplatten an anderen Bauteilen zu befestigen oder die Flanschplatten mit anderen Bauteilen zu verbinden.

Im Kraftfahrzeugbau kommen Flanschplatten unter anderem bei Fahrwerksbauteilen zur Anwendung. Bei Verbundlenkerachsen wie auch bei Radträgern an Mehrlenkerachsen werden Flanschplatten als Anbindungspunkt für das Rad und die Bremsanlage verwendet. Eine Verbundlenkerachse besteht aus einem quer zur Fahrzeuglängsrichtung orientierten Torsionsprofil und daran gefügten Längslenkern, die im Wesentlichen in Fahrzeuglängsrichtung orientiert sind. Die Längslenker sind häufig als gebogener Rohrkörper oder Zylinder mit gegebenenfalls variierendem Querschnittsprofil ausgebildet. Eine Flanschplatte sitzt jeweils auf einem radseitigen Ende eines Längslenkers und ist üblicherweise mit dem Längslenker verschweißt.

Flanschplatten der erfindungsgemäßen Art sind insbesondere für den Einsatz in einem Kraftfahrzeugfahrwerk bestimmt, insbesondere einem Fahrwerksbauteil bzw. einer Fahrwerkskomponente. Im Speziellen sind die erfindungsgemäßen Flanschplatten für den Einsatz in Verbundlenkerachsen sowie an Radträgern für Mehrlenkerachsen bestimmt.

Typische Dimensionen von Flanschplatten liegen im Bereich von 100 x 100 mm bis 200 x 200 mm. Flanschplatten unterliegen innerhalb einer Baugruppe hohen statischen und dynamischen Belastungen. Die Flanschplatten müssen daher eine hohe mechanische Belastbarkeit und hohe Steifigkeit aufweisen. Diese Ansprüche steigen mit zunehmendem Gewicht eines Kraftfahrzeugs, insbesondere bei Fahrzeugen, die ausschließlich von einem elektrischen Antriebssystem betrieben werden, sogenannten Battery Electric Vehicles (BEV). Diese weisen hohe Massen auf, wodurch die Notwendigkeit besteht, die Eigenschaften von Flanschplatten, insbesondere für die Anwendung in solchen Fahrzeugen zu verbessern.

In der EP 3 202 602 B1 wird ein Herstellungsverfahren für eine Flanschplatte einer Verbundlenkerachse offenbart, die verschiedene Arbeitsschritte aufweist. Die Flanschplatte besitzt durch Stanzen eingebrachte Durchgangslöcher. Das Herstellungsverfahren stößt jedoch insbesondere bei Flanschplatten mit größeren Wandstärken an seine Grenzen.

Weiterhin offenbart die DE 10 2018 206 343 A1 ein Verfahren zur Serienfertigung warmumgeformter Blechformteile. Dabei wird ein Stahlblechband von einem Coil abgewickelt und erwärmt, sodass sich ein austenitisches Gefüge bildet. Das Stahlblechband wird dann vorgekühlt und aus dem vorgekühlten Stahlblechband Platinen erzeugt. Anschließend erfolgt ein Warmumformen der Platinen zu Blechformteilen, ein Beschneiden der Blechformteile sowie ein Formkalibrieren der Blechformteile mit Hilfe mehrerer, nacheinander angeordneter Werkzeuge. Beim Warmumformen, Beschneiden und/oder Formkalibrieren erfolgt ein gleichzeitiges Abkühlen.

Der Erfindung liegt ausgehend vom Stand der Technik die Aufgabe zugrunde, eine Flanschplatte anwendungstechnisch und herstellungstechnisch zu verbessern und insbesondere für den Einsatz in hochbelasteten Anwendungen in Kraftfahrzeugen, vornehmlich in Elektrofahrzeugen, zu ertüchtigen sowie ein Verfahren zur rationellen Herstellung von qualitativ hochwertigen Flanschplatten aufzuzeigen.

Die Lösung des gegenständlichen Teils der Aufgabe besteht in einer Flanschplatte gemäß Anspruch 1.

Ein erfindungsgemäßes Verfahren ist jeweils in den Ansprüchen 7 und 8 charakterisiert. Der technologische Zusammenhang besteht darin, dass die zumindest eine Druckumformoperation und die zumindest eine Stanzoperation bei der Herstellung einer erfindungsgemäßen Flanschplatte bei erhöhter Temperatur jedoch in voneinander verschiedenen Temperaturbereichen durchgeführt werden, wobei die Temperatur beim Druckumformen höher ist als die Temperatur bei der stanztechnischen Bearbeitung der Flanschplatte.

Vorteilhafte Ausgestaltungen und Weiterbildungen der erfindungsgemäßen Flanschplatte sowie des erfindungsgemäßen Verfahrens zur Herstellung einer Flanschplatte sind Gegenstand der abhängigen Ansprüche.

Eine erfindungsgemäße Flanschplatte besteht aus Stahl.Erfindungsgemäß weist die Flanschplatte eine Wandstärke von größer oder gleich 8 mm bis zum ≤ 16 mm auf. Insbesondere besitzt die Flanschplatte eine Wandstärke zwischen 10,0 mm und 14,5 mm. Die Wandstärke ist gemessen am Plattenkörper der Flanschplatte außerhalb von Bereich, die gegenüber einer flachen Plattenseite des Plattengrundkörpers bzw. der Flanschplatte vorstehen, wie Ansätzen oder Verdickungen. Die Erfindung sieht vor, dass die Flanschplatte eine stanztechnische erzeugte Außenkontur und/oder die Flanschplatte zumindest eine stanztechnisch erzeugte Innenkontur aufweist.

Bei der Stanzoperation handelt es sich um Warmstanzen an einer auf eine Stanztemperatur eingestellten Platte. Die stanztechnische Bearbeitung zur Herstellung der Außenkontur und/oder der Innenkontur erfolgt insbesondere an einer auf eine Stanztemperatur zwischen 450°C und 700° C, vorzugsweise zwischen 450° C und 650° C erwärmten Platte.

Vor dem Stanzen der Platte wird diese auf Stanztemperatur eingeteilt. In diesem warmen Zustand ist der Werkstoff vorteilhaft stanztechnisch bearbeitbar. Es wird eine saubere und präzise Stanzkante an dem Stanzabschnitt erzeugt. Vorteilhaft ist auch, dass beim Warmstanzen weniger Spannungen im Material erzeugt werden, was die Gefahr von Rissen oder Verformungen verringert. Das Warmstanzen ermöglicht die Herstellung von Flanschplatten mit komplexeren Formen.

Insbesondere können durch das Warmstanzen dickere Flanschplatten realisiert werden mit Wandstärken mit den erfindungsgemäßen Abmessungen. Durch das Warmstanzen erhält man eine bessere Oberflächenqualität in den Stanzabschnitten, weniger Spannungen im Material sowie eine höhere Formgenauigkeit an der Außenkontur und/oder der Innenkontur.

Bei einer vorteilhaften Ausführungsform einer erfindungsgemäßen Flanschplatte weist diese zumindest einen gegenüber einer Plattenseite der Flanschplatte vorstehenden Ansatz auf. Der Ansatz ist dafür eingerichtet und bestimmt, die Flanschplatte mit einem weiteren Bauteil, insbesondere einem Längslenker einer Verbundlenkerachse oder mit einem Radträger zu verbinden.

Die Flanschplatte besitzt vorzugsweise zumindest einen durch Druckumformen werkstoffeinheitlich einstückig an der Flanschplatte ausgebildeten Ansatz. Der Ansatz steht gegenüber einer Plattenseite vor, ist also gegenüber der Fläche der Plattenseite erhaben. Der Ansatz dient als Verbindungspunkt für ein weiteres Bauteil, insbesondere eines Fahrwerksbauteils, vorzugsweise eines Längslenkers einer Verbundlenkerachse oder eines Radträgers. Der Ansatz ermöglicht eine präzise Führung bzw. Positionierung der Flanschplatte relativ zum Anbauteil, was für Stabilität, Steifigkeit und Kraftübertragung vorteilhaft ist.

Die erfindungsgemäße Flanschplatte weist die für ein Kraftfahrzeug innerhalb eines Fahrwerks geforderte hohe mechanische Belastbarkeit und hohe Steifigkeit auf.

Die erfindungsgemäße Flanschplatte ist durch Druckumformen insbesondere Prägen und Stanzen bei erhöhter Temperatur hergestellt, wobei die Druckumformoperation bei einer Druckumformtemperatur erfolgt, die höher ist als die Stanztemperatur, bei welcher die Flanschplatte in einer Stanzoperation durch Stanzen bzw. stanztechnisch bearbeitet wird.

Die Erfindung macht sich die Erkenntnis zu eigen, dass das Druckumformen zur Erzeugung zumindest eines Ansatzes an einer Plattenseite der Flanschplatte bei einer Temperatur in einem Bereich von 700° C bis 900° C, insbesondere zwischen 700° C bis 850° C vorteilhaft ist. Für eine stanztechnische Bearbeitung der Flanschplatte ist allerdings ein niedrigerer Temperaturbereich vorteilhaft. Hier hat sich ein Temperaturfenster von 450° C bis 700° C, insbesondere von 450° C bis 650° C als vorteilhaft erwiesen.

Die Erfindung stellt daher darauf ab, die Druckumformung bei einer Temperatur von größer oder gleich 700° C durchzuführen, wohingegen die stanztechnische Bearbeitung der Platte bei einer Stanztemperatur unterhalb von 700° C erfolgt.

In der Stanzoperation wird die Flanschplatte zumindest bereichsweise beschnitten. Hierbei kann an der Flanschplatte stanztechnisch eine Außenkontur oder eine Innenkontur erzeugt werden.

Ein Aspekt der Erfindung sieht vor, dass der werkstoffeinheitlich einstückig an der Flanschplatte ausgebildete Ansatz eine Schweißbadstütze oder einen Montagepunkt bildet. Auch kann der Ansatz dazu eingerichtet und bestimmt sein, eine Schweißbadstütze, einen Montagepunkt oder einen Durchgang zu bilden.

Vorzugsweise weist der Ansatz eine Höhe auf, die zwischen größer oder gleich 1,0 mm und kleiner oder gleich 5,0 mm bemessen ist. Die Höhe des Ansatzes bemisst sich von der Plattenseite der Flanschplatte, an welcher sich der Ansatz befindet bis zum vorstehenden freien Ende des Ansatzes.

Ein Ansatz in Form einer Schweißbadstütze hat typischerweise eine Höhe von 1 mm bis 3 mm. Der Ansatz wird beim Verschweißen der Flanschplatte mit einem Anbauteil, also insbesondere einem Längslenker einer Verbundlenkerachse in das freie Ende des Längslenkers eingeführt. Der Ansatz stützt die innere Kontur des Längslenkers im Fügebereich und stabilisiert das Schweißbad während des Schweißprozesses.

Ein Ansatz kann auch eine Verprägung sein in den Bereichen, in denen später ein Durchgang und/oder ein Gewinde eingebracht wird. Der Ansatz bildet folglich eine lokale Verdickung, um die Klemmlänge eines Durchgangs oder eines Lochs mit einem Innengewinde zu vergrößern. Der Ansatz bildet einen verdickten Montagepunkt. Des Weiteren können druckumgeformte Ansätze auch dafür eingerichtet und bestimmt sein, Freigänge bzw. Durchgänge an der Flanschplatte, beispielsweise zur Bremse, zu schaffen.

Weiterhin besitzt eine erfindungsgemäße Flanschplatte vorzugsweise Löcher bzw. Durchgänge, die zum Handling in der Montage genutzt werden oder zur Gewichtsreduktion dienen. Auch können solche Löcher oder Durchgänge für einen Beschichtungsprozess, insbesondere einen Lackiervorgang notwendig oder vorteilhaft sein. Weiterhin können Durchgänge in Form von Gewindebohrungen vorgesehen sein, die zur Montage eines Rades oder einer Bremse genutzt werden.

Durchgänge bzw. Löcher in der Flanschplatte werden insbesondere durch eine stanztechnisch erzeugte Innenkontur gebildet.

Der Außenrand bzw. die randseitige Außenkontur wird ganz oder zumindest bereichsweise ebenfalls durch eine Stanzoperation erzeugt.

Die Erfindung schlägt vor, dass Druckumformen und Stanzen bei einer erhöhten Temperatur durchzuführen, wobei die Druckumformtemperatur größer ist als die Stanztemperatur. Dies erlaubt zum einen eine Herstellung von Flanschplatten mit hoher Materialstärke und reduziert weiterhin die Belastung der Werkzeugkomponenten, was deren Lebensdauer erhöht.

Die Flanschplatte besteht vorzugsweise aus einem warmgewalzten mikrolegierten Feinkornstahl.

Insbesondere weist die Flanschplatte eine Mindeststreckgrenze Re von größer oder gleich 350 MPa auf.

Ein für eine erfindungsgemäße Flanschplatte gut geeigneter hochfester Baustahl weist eine Zusammensetzung auf die die folgenden Elemente umfasst:

| | |
|---|---|
| - Kohlenstoff (C): | max. 0,20 % |
| - Silizium (Si): | max. 0,60 % |
| - Mangan (Mn): | 1,00 - 1,60 % |
| - Phosphor (P): | max. 0,025 % |
| - Schwefel (S): | max. 0,015 % |
| - Aluminium (Al): | 0,020 - 0,10 % |
| - Titan (Ti): | kann in geringen Mengen vorhanden sein, um die Korngrenzen zu stabilisieren |
| - Eisen (Fe): | Rest einschließlich erschmelzungsbedingter Verunreinigungen. |

Ein weiterer vorteilhafter Stahlwerkstoff wird in einem Stahl gesehen mit einer Zusammensetzung die folgenden Elemente aufweist:

| | |
|---|---|
| - Kohlenstoff (C): | max. 0,24 % |
| - Silizium (Si): | max. 0,55 % |
| - Mangan (Mn): | 1,40 - 1,70 % |
| - Kupfer (Cu): | max. 0,55 % |
| - Phosphor (P): | max. 0,045 % |
| - Schwefel (S): | max. 0,045 % |
| - Eisen (Fe): | Rest um die Legierung zu vervollständigen einschließlich erschmelzungsbedingter Verunreinigungen. |

Die vorgenannten Stahlwerkstoffe weisen eine hohe Festigkeit und eine gute Verformbarkeit aus, was sie für die Anwendung als Flanschplatte gut geeignet macht bei denen hohe mechanische Eigenschaften, insbesondere Festigkeit und Steifigkeit gefordert sind.

Ein Verfahren zur Herstellung einer aus Stahl bestehenden Flanschplatte, wobei diese zumindest einen gegenüber einer Plattenseite vorstehenden Ansatz sowie zumindest einen Stanzabschnitt aufweist, sieht vor, dass der Ansatz an der Flanschplatte in einer Druckumformoperation durch Druckumformen bei einer Druckumformtemperatur T1 erzeugt wird und der Stanzabschnitt an der Flanschplatte in einer Stanzoperation durch Stanzen bei einer Stanztemperatur T2 erzeugt wird. Erfindungsgemäß ist die Druckumformtemperatur T1 höher als die Stanztemperatur T2.

Beim Druckumformen wird der Werkstoff der Platte, die als Ausgangsprodukt zur Herstellung der Flanschplatte dient, unter Druck in eine bestimmte Form gebracht ohne dass es dabei zu einem Materialabtrag kommt. Das Druckumformen kann ein Prägen der Plattenseite sein. Erfindungsgemäß wird beim Prägen durch ein Prägewerkzeug Druck auf eine Plattenseite ausgeübt, um an der Plattenseite eine Struktur mit einem gegenüber der Platte vorstehenden Ansatz zu erzeugen. Der Werkstoff wird hierbei plastisch verformt und der Ansatz werkstoffeinheitlich einstückig an der Platte ausgebildet.

Ein an einer Plattenseite vorstehender Ansatz kann eine auf den Innenumfang eines Anbauteils abgestimmten Außenumfang besitzen. Ein Ansatz kann rotationssymmetrisch ausgebildet sein. Der vorstehende Ansatz kann auch Formschlusselemente oder Formschlusskonturen besitzen.

Ein Ansatz kann auch eine lokale Verdickung bilden, um die Klemmlänge eines Durchgangs oder eines Lochs mit einem Innengewinde zu vergrößern.

Das Stanzen erfolgt in einer Stanzoperation mit Hilfe eines Stanzwerkzeuges, wobei eine bestimmte Innenkontur oder Außenkontur in die Platte geschnitten wird. Der Stanzabschnitt ist das Ergebnis des Stanzvorgangs und kann in verschiedener Form und Größe bzw. Länge hergestellt werden. Die Konfiguration des Stanzabschnittes erfolgt den Anforderungen der Flanschplatte entsprechend. Bei einer oder mehrerer Stanzoperationen enthält die Flanschplatte eine Innenkontur und/oder eine Außenkontur.

Besonders vorteilhaft erfolgt die mechanische Bearbeitung einer Platte zur Herstellung einer Flanschplatte in einem Folgeverbundwerkzeug. Das Folgeverbundwerkzeug ermöglicht die gleichzeitige Durchführung mehrerer Bearbeitungsschritte in einem Arbeitsgang. Durch die Kombination mehrerer Bearbeitungsschritte in einem Werkzeug wird die Produktionszeit verkürzt, da die Platten nicht zwischen verschiedenen Maschinen transportiert werden müssen. Auch ist in einem Folgeverbundwerkzeug eine hohe Produktionsgenauigkeit und Wiederholbarkeit bei der Bearbeitung gewährleistet. Weiterhin führt die Reduzierung der Anzahl von Einzelbearbeitungsstationen oder Maschinen und der Arbeitsgänge zu einer Verringerung der Produktionskosten.

Das Stanzen kann ein Lochen und/oder ein Schneiden umfassen. Beim Lochen wird ein Loch in die Flanschplatte gestanzt, um beispielsweise Befestigungselemente oder Durchführungen zu schaffen. Beim Schneiden werden Teile des Werkstoffs entlang einer bestimmten Kontur oder einer Form abgeschnitten oder herausgetrennt, um spezifische Flanschplattenelemente zu erzeugen.

Insbesondere betrifft die Erfindung ein Verfahren zur Herstellung einer Flanschplatte, welche zumindest einen gegenüber einer Plattenseite der Flanschplatte vorstehenden Ansatz sowie zumindest einen Stanzabschnitt aufweist. Das Verfahren ist gekennzeichnet durch folgende Schritte:
- Bereitstellen einer Platte aus Stahl und Erwärmen der Platte auf eine Druckumformtemperatur (T1) von größer oder gleich (≥) 700 °C;
- Druckumformen der auf Druckumformtemperatur (T1) erwärmen Platte in zumindest einer Druckumformoperation, in welcher eine Plattenseite mit zumindest einem gegenüber der Plattenseite vorstehenden Ansatz ausgebildet wird;
- Stanztechnische Bearbeitung der Platte in zumindest einer Stanzoperation bei einer Stanztemperatur (T2) unterhalb von 700 °C, wobei die Flanschplatte mit dem zumindest einen Stanzabschnitt gebildet wird.

Insbesondere liegt die Druckumformtemperatur T1 zwischen 700° C und 950° C, besonders bevorzugt zwischen 700° C und 850° C. Die Stanzoperation wird bei einer geringeren Temperatur durchgeführt. Die Erfindung sieht vor, dass die Stanztemperatur T2 zwischen 450° C und kleiner 700° C liegt, insbesondere zwischen 450° C und 650° C.

Um die Herstellung der Flanschplatte möglichst effizient zu gestalten, ist erfindungsgemäß vorgesehen, dass zunächst eine Platte (Ausgangsplatte) auf eine Temperatur oberhalb von 700° C erwärmt wird. Dies kann beispielsweise induktiv erfolgen oder aber auch durch einen Gas- oder Elektroofen. Die Platte wird dann in ein Folgeverbundwerkzeug überführt und in mehreren Pressenschritten bearbeitet. Dabei erfolgt zunächst eine Druckumformoperation. Beim Druckumformen wird Material der Platte durch Druck in eine bestimmte Form gebracht und der zumindest eine Ansatz werkstoffeinheitlich einstückig gebildet, ohne dabei Material von der Platte abzutragen. An zumindest einer Plattenseite der Platte wird durch die Druckumformung eine Struktur erzeugt, in dem Werkstoff plastisch verformt und der vorstehende Ansatz ausgebildet wird.

Durch den Kontakt des Werkstücks, also der Platte, mit dem Druckumformwerkzeug oder den mehreren Druckumformwerkzeugen, kühlt dieses ab. Anschließend erfolgt zumindest eine Stanzoperation bei der erfindungsgemäß vorgesehenen geringeren Stanztemperatur, die unterhalb von 700° C liegt.

Je nach Temperaturverlauf, der sich während der Druckumformoperation ergibt, kann die Platte nach der Druckumformoperation und vor der Stanzoperation abgekühlt werden.

Eine Abkühlung kann durch natürliche Abkühlung im Wege einer Wärmeübertragung an die Umgebung durch Konvektion, Wärmeleitung oder Strahlung erfolgen.

Die Werkzeuge zum Druckumformen, Kühlen und Stanzen können bei Bedarf auch aktiv gekühlt werden.

Eine Abkühlung nach dem Druckumformen kann auch in einem separaten Kühlschritt bzw. Kühloperation erfolgen, um die für das anschließende Stanzen vorgesehene Stanztemperatur einzustellen.

Die Abkühlung erfolgt bevorzugt durch eine Kontaktkühlung, die in das Folgeverbundwerkzeug integriert ist. Dies ist vorteilhaft, da die Taktzeit hierdurch nicht erhöht wird. Bei Bedarf können auch mehrere Kühlschritte bzw. Kühloperationen durchgeführt werden. Dabei wird bevorzugt der gesamte Bereich des Werkstücks gekühlt, der später die Flanschplatte bildet.

Es ist auch denkbar, dass ein Kühlen nur lokal erfolgt und zwar in solchen Bereichen, wo anschließend eine stanztechnische Bearbeitung erfolgt, beispielsweise ein Durchgangsloch gestanzt werden soll.

Bei einer natürlichen Abkühlung, ebenso wie bei einer aktiven Kühlung ist es vorteilhaft, dass der Werkstoff der Platte in seiner gesamten Tiefe bzw. Wandstärke hinreichend abgekühlt wird. Aufgrund der erfindungsgemäß vorgesehenen relativ hohen Materialstärke wird die Platte in einem größeren Umfang gekühlt als die später vorgesehene stanztechnische Bearbeitung, so dass effektiv genügend Wärme innerhalb der Taktzeit abgeführt wird.

Die Druckumformoperation, eine optionale Kühloperation und die Stanzoperation werden erfindungsgemäß in einem Folgeverbundwerkzeug durchgeführt.

Bei einer Stanzoperation kann eine Innenkontur, insbesondere in Form eines Durchgangs in die Flanschplatte eingebracht werden.

Weiterhin kann bei einer Stanzoperation eine Außenkontur an der Flanschplatte erzeugt werden.

Besonders vorteilhaft wird bei einer Stanzoperation ein endformgebender Beschnitt, insbesondere des Außenrandes der Flanschplatte durchgeführt.

Die Erfindung ist nachfolgend anhand von Zeichnungen nochmals erläutert. Es zeigen:
- Figur 1: eine Verbundlenkerachse mit Torsionsprofil, Längslenkern und daran gefügten Flanschplatten in einer schematischen technisch vereinfachten Darstellung;
- Figur 2: einen hinteren Abschnitt eines Längslenkers mit endseitig gefügter Flanschplatte;
- Figur 3: eine erfindungsgemäße Flanschplatte mit einer Ansicht auf die Plattenseite, die zur Koppelung mit einem weiteren Bauteil, beispielsweise einem Längslenker, bestimmt ist und
- Figur 4: eine Flanschplatte in einer Seitenansicht.

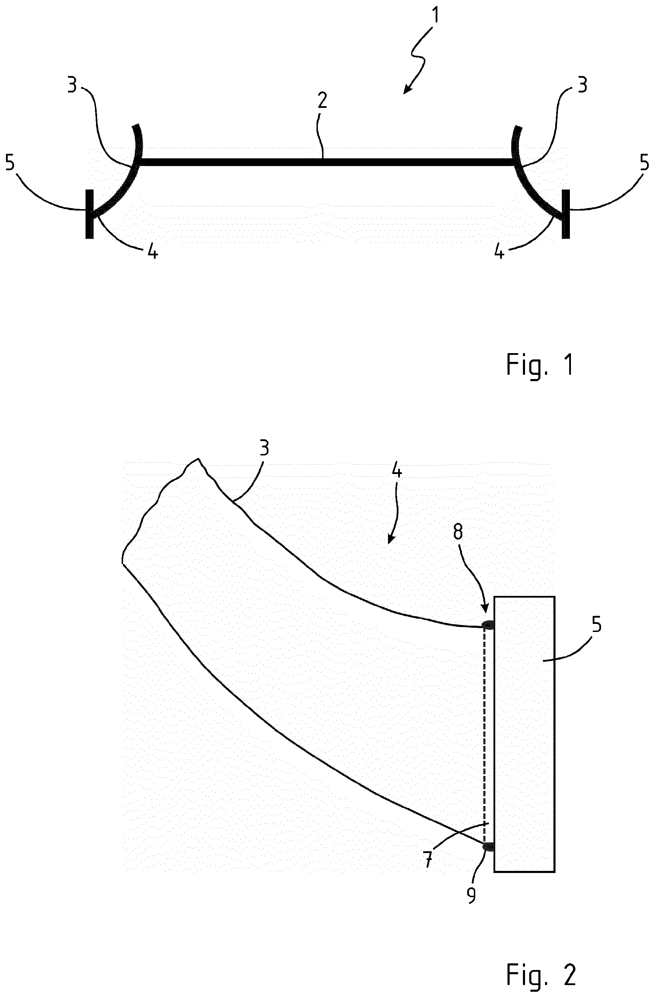

Die Figur 1 zeigt schematisch und technisch vereinfacht eine Verbundlenkerachse 1 für Kraftfahrzeug.

Die Verbundlenkerachse 1 umfasst im Wesentlichen ein quer zur Fahrzeuglängsrichtung orientiertes Torsionsprofil 2 sowie mit dem Torsionsprofil 2 gefügte Längslenker 3, die im Wesentlichen in Fahrzeuglängsrichtung orientiert sind. Die Längslenker 3 können als gebogene Zylinder mit gegebenenfalls variierendem Querschnittsprofil ausgebildet sein. Am radträgerseitigen Ende 4 eines Längslenkers 3 ist jeweils eine Flanschplatte 5 angesetzt und mit einem Längslenker 3 verschweißt.

Ein radträgerseitiges Ende 4 eines Längslenkers 3 mit gefügter Flanschplatte 5 zeigt die Darstellung der Figur 2.

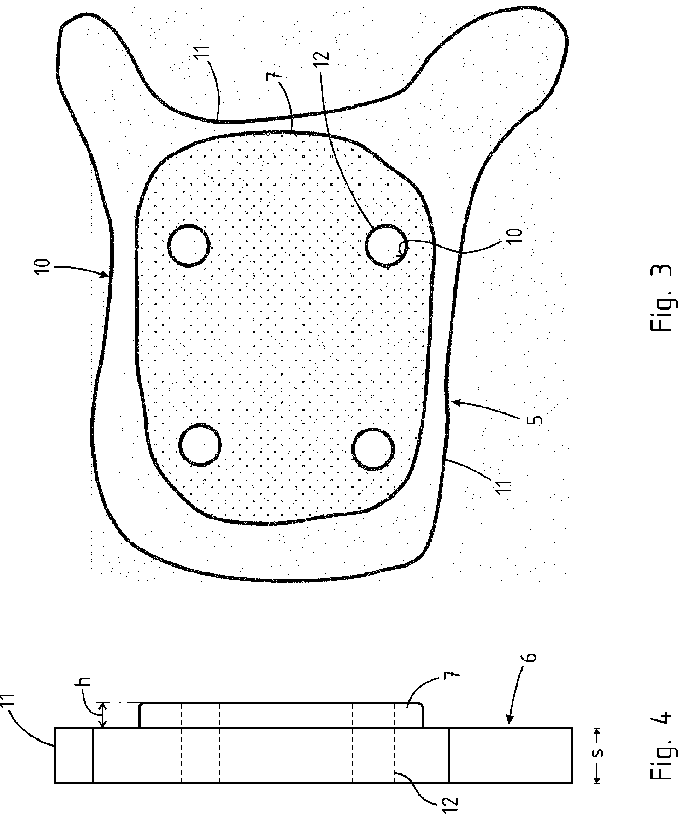

Eine Flanschplatte 5 in einer Ansicht ist in der Figur 3 und in einer Seitenansicht ist in der Figur 4 dargestellt.

Die Flanschplatte 5 besteht aus einem warmgewalzten mikrolegierten Feinkornstahl. Die Flanschplatte 5 besitzt eine Mindeststreckgrenze Re von größer oder gleich (≥) 350 MPa. Die Flanschplatte 5 besitzt eine Wandstärke s zwischen jeweils einschließlich 8 mm und 16 mm, insbesondere ist die Flanschplatte zwischen 10,0 mm und 14,5 mm dick.

Die Flanschplatte 5 weist einen gegenüber einer Plattenseite 6 vorstehenden Ansatz 7 auf.

Der Ansatz 7 ist durch Druckumformen werkstoffeinheitlich einstückig an der Flanschplatte 5 ausgebildet. Der Ansatz 7 steht gegenüber der Plattenseite 6 der Flanschplatte 5 vor und besitzt eine Höhe h zwischen 1,0 mm und 5,0 mm.

Der Ansatz 7 ist dazu eingerichtet und bestimmt, eine Schweißbadstütze 8 zu bilden. Eine Schweißbadstütze 8 wie in der Figur 2 dargestellt, besitzt typischerweise eine Höhe h von 1 mm bis 3 mm. Der Ansatz 7 wird zum Verschweißen der Flanschplatte 5 mit dem Längslenker 3 in das Ende 4 des Längslenkers 3 eingeführt. Der Ansatz 7 stützt die innere Kontur des Längslenkers 3 im Fügebereich ab. Eine Schweißnaht 9 ist umlaufend um den Außenumfang des Längslenkers 3 am Ende 4 geführt. Die Schweißbadstütze 8 erleichtert den Schweißprozess und stabilisiert das Schweißbad während des Schweißens. Zudem wird ein Verzug zwischen den Bauteilen minimiert.

Die Flanschplatte 5 ist aus einem Flachstahl als Ausgangsplatte durch Druckumformen und Stanzen gebildet.

Die Flanschplatte 5 weist Stanzabschnitte 10 auf. Durch einen Stanzabschnitt 10 ist eine Außenkontur 11 der Flanschplatte 5 gebildet. Des Weiteren sind durch Stanzabschnitte 10 Innenkonturen 12 in Form von Löchern in der Flanschplatte 5 gebildet.

Bei der Herstellung der Flanschplatte 5 wird eine Ausgangsplatte aus Stahl, insbesondere ein gegebenenfalls vorkonfektionierter Flachstahl, in mehreren Schritten bearbeitet und aus der Ausgangsplatte die Flanschplatte 5 gebildet. Das Verfahren umfasst zumindest die folgenden Schritte:
1. Erwärmen der Ausgangsplatte auf eine Druckumformtemperatur T1 oberhalb von 700° C;
2. Ein oder mehrere Druckumformoperationen an der Platte, insbesondere Prägeschritte im Temperaturbereich oberhalb von 700° C;
3. Optional Kühlung, insbesondere Kontaktkühlung der Platte auf eine Temperatur unterhalb von 700° C;
4. Stanztechnische Bearbeitung der Platte bei einer Stanztemperatur T2 unterhalb von 700° C, insbesondere Beschneiden und/oder Lochen der Platte und Endkonfektionierung der Flanschplatte.

Die Herstellung einer Flanschplatte 5 und die dabei durchgeführten Druckumformoperationen und Stanzoperationen erfolgen vorzugsweise in einem Folgeverbundwerkzeug.

Zur Herstellung der Flanschplatte 5 wird eine Platte (Ausgangsplatte) auf eine Druckumformtemperatur T1 oberhalb von 700° C erwärmt. Dies kann induktiv erfolgen oder auch in einem Gasofen oder einem Elektroofen. Die Ausgangsplatte wird in ein Folgeverbundwerkzeug überführt und in mehreren Druckumformschritten bearbeitet. Das Druckumformen erfolgt in einem Pressen- oder Prägewerkzeug. Hierbei erfolgt zunächst eine Prägeoperation, bei der der Ansatz 7 ausgebildet wird.

Die auf eine Druckumformtemperatur T1 oberhalb von 700° C erwärmte Platte wird dazu in einer oder mehrerer Druckumformoperationen druckumformtechnisch bearbeitet und der zumindest eine Ansatz 7 werkstoffeinheitlich einstückig an der Plattenseite 6 der Flanschplatte 5 ausgebildet. Der Ansatz 7 steht gegenüber der Plattenseite 6 der Flanschplatte 5 vor. Insbesondere liegt die Druckumformtemperatur T1 zwischen 700° C und 950° C, besonders bevorzugt zwischen 700° C und 850° C.

Nach der druckumformtechnischen Bearbeitung der Platte wird diese in zumindest einer Stanzoperation durch Stanzen bei einer Stanztemperatur T2 mechanisch bearbeitet, wobei eine oder mehrere Stanzabschnitte 10 erzeugt werden.

Die Druckumformtemperatur T1 ist höher als die Stanztemperatur T2.

Die Stanzoperation wird bei einer Stanztemperatur T2 zwischen 450° C und 700° C durchgeführt, insbesondere liegt die Stanztemperatur T2 zwischen 450° C und 650° C.

Eine Abkühlung der Platte und die Einstellung der Stanztemperatur T2 auf eine Temperatur unterhalb von 700° C kann durch eine natürliche oder aktive Kühlung erfolgen.

Durch den Kontakt der Platte mit dem Werkzeug oder den Werkzeugen beim Prägen (Druckumformen) kühlt die Platte ab. Anschließend erfolgt die stanztechnische Bearbeitung durch Stanzen in einer Stanzoperation, wobei die Temperatur der Platte auf eine Stanztemperatur T2 reduziert ist.

Je nach Temperaturverlauf, der sich während der Druckumformoperation ergibt, kann nach dem Druckumformen eine separate aktive Kühloperation erfolgen, um die für das anschließende Stanzen vorgesehene Stanztemperatur T2 einzustellen. Dies erfolgt bevorzugt durch eine Kontaktkühlung, die in das Folgeverbundwerkzeug integriert ist.

Bei den Stanzoperationen erhält die Flanschplatte 5 eine Innenkontur 12 in Form eines Durchgangs bzw. eines Lochs. Die Innenkonturen 12 in Form von Durchgängen bzw. Löchern sind im Bereich des Ansatzes 7 der Flanschplatte 5 eingebracht. Des Weiteren wird bei der stanztechnischen Bearbeitung die Außenkontur 11 der Flanschplatte 5 erzeugt. Hierbei erfolgt insbesondere ein endformgebender Beschnitt der Flanschplatte 5.

### Bezugszeichen:

- 1 -: Verbundlenkerachse
- 2 -: Torsionsprofil
- 3 -: Längslenker
- 4 -: radträgerseitiges Ende
- 5 -: Flanschplatte
- 6 -: Plattenseite
- 7 -: Ansatz
- 8 -: Schweißbadstütze
- 9 -: Schweißnaht
- 10 -: Stanzabschnitt
- 11 -: Außenkontur
- 12 -: Innenkontur

- h -: Höhe v. 7
- s -: Wandstärke v. 5
- T1 -: Druckumformtemperatur
- T2 -: Stanztemperatur

## Patentansprüche

1. Flanschplatte (5) aus Stahl, **dadurch gekennzeichnet, dass** die Flanschplatte (5) eine Wandstärke (s) von größer oder gleich (≥) 8,0 mm bis kleiner oder gleich (≤) 16,0 mm, insbesondere von 10,0 mm bis 14,5 mm, besitzt und die Flanschplatte (5) eine stanztechnisch erzeugte Außenkontur (11) aufweist und/oder die Flanschplatte (5) zumindest eine stanztechnisch erzeugte Innenkontur (12) aufweist.

2. Flanschplatte (5) nach Anspruch 1, **dadurch gekennzeichnet, dass** die Flanschplatte (5) zumindest einen gegenüber einer Plattenseite (6) der Flanschplatte (5) vorstehenden Ansatz (7) aufweist und der Ansatz (7) durch Druckumformen werkstoffeinheitlich einstückig an der Flanschplatte (5) ausgebildet ist.

3. Flanschplatte (5) nach Anspruch 2, **dadurch gekennzeichnet, dass** der Ansatz (7) eine Schweißbadstütze (8) oder einen Montagepunkt bildet oder der Ansatz (7) dazu eingerichtet und bestimmt ist, eine Schweißbadstütze (8), einen Montagepunkt oder einen Durchgang zu bilden.

4. Flanschplatte (5) nach Anspruch 2 oder 3, **dadurch gekennzeichnet, dass** der Ansatz (7) eine Höhe (h) zwischen größer oder gleich (≥) 1,0 mm und kleiner oder gleich (≤) 5,0 mm besitzt.

5. Flanschplatte (5) nach einem der Ansprüche 1 bis 4, **dadurch gekennzeichnet, dass** die Flanschplatte (5) aus einem warmgewalzten mikrolegierten Feinkornstahl besteht.

6. Flanschplatte (5) nach einem der Ansprüche 1 bis 5, **dadurch gekennzeichnet, dass** die Flanschplatte (5) eine Mindeststreckgrenze Re von größer oder gleich (≥) 350 MPa besitzt.

7. Verfahren zur Herstellung einer stählernen Flanschplatte (5), welche zumindest einen gegenüber einer Plattenseite (6) vorstehenden Ansatz (7) sowie zumindest einen Stanzabschnitt (10) aufweist, **dadurch gekennzeichnet, dass** der Ansatz (7) an der Flanschplatte (5) in einer Druckumformoperation durch Druckumformen bei einer Druckumformtemperatur (T1) erzeugt wird und der Stanzabschnitt (10) an der Flanschplatte (5) in einer Stanzoperation durch Stanzen bei einer Stanztemperatur (T2) erzeugt wird, wobei die Druckumformtemperatur (T1) höher ist als die Stanztemperatur (T2).

8. Verfahren zur Herstellung einer Flanschplatte (5), welche zumindest einen gegenüber einer Plattenseite (6) der Flanschplatte (5) vorstehenden Ansatz (7) sowie zumindest einen Stanzabschnitt (10) aufweist, **gekennzeichnet durch** folgende Schritte:
- Bereitstellen einer Platte aus Stahl und Erwärmen der Platte auf eine Druckumformtemperatur (T1) von größer oder gleich (≥) 700 °C;
- Druckumformen der auf Druckumformtemperatur (T1) erwärmen Platte in zumindest einer Druckumformoperation, in welcher eine Plattenseite (6) mit zumindest einem gegenüber der Plattenseite (6) vorstehenden Ansatz (7) ausgebildet wird;
- Stanztechnische Bearbeitung der Platte in zumindest einer Stanzoperation bei einer Stanztemperatur (T2) unterhalb von 700 °C, wobei die Flanschplatte (5) mit dem zumindest einen Stanzabschnitt (10) gebildet wird.

9. Verfahren nach Anspruch 7 oder 8, **dadurch gekennzeichnet, dass** die Druckumformtemperatur (T1) zwischen 700 °C und 950 °C, insbesondere zwischen 700 °C und 850 °C, beträgt und die Stanztemperatur (T2) zwischen 450 °C und kleiner (<) 700 °C, insbesondere zwischen 450 °C und 650 °C, beträgt.

10. Verfahren nach einem der Ansprüche 7, 8 oder 9, **dadurch gekennzeichnet, dass** die Platte nach der Druckumformoperation und vor der Stanzoperation abgekühlt wird.

11. Verfahren nach wenigstens einem der Ansprüche 7 bis 10, **dadurch gekennzeichnet, dass** die Druckumformoperation, eine optionale Kühloperation und die Stanzoperation in einem Folgeverbundwerkzeug durchgeführt werden.

12. Verfahren nach wenigstens einem der Ansprüche 7 bis 11, **dadurch gekennzeichnet, dass** bei einer Stanzoperation eine Innenkontur (12), insbesondere in Form eines Durchgangs, in die Flanschplatte (5) eingebracht wird.

13. Verfahren nach wenigst0ens einem der Ansprüche 7 bis 123, **dadurch gekennzeichnet, dass** bei einer Stanzoperation eine Außenkontur (11) an der Flanschplatte (5) erzeugt wird.

14. Verfahren nach wenigstens einem der Ansprüche 7 bis 13, **dadurch gekennzeichnet, dass** bei einer Stanzoperation ein endformgebender Beschnitt der Flanschplatte (5) durchgeführt wird.

## Geänderte Patentansprüche

### Geänderte Patentansprüche gemäss Regel 137(2) EPÜ.

1. Flanschplatte (5) aus Stahl für eine Verbundlenkerachse (1) oder einen Radträger eines Kraftfahrzeugs, **dadurch gekennzeichnet, dass** die Flanschplatte (5) eine Wandstärke (s) von größer oder gleich (≥) 8,0 mm bis kleiner oder gleich (≤) 16,0 mm, insbesondere von 10,0 mm bis 14,5 mm, besitzt und die Flanschplatte (5) eine stanztechnisch erzeugte Außenkontur (11) aufweist und die Flanschplatte (5) zumindest eine stanztechnisch erzeugte Innenkontur (12) aufweist, sowie die Flanschplatte (5) zumindest einen gegenüber einer Plattenseite (6) der Flanschplatte (5) vorstehenden Ansatz (7) aufweist und der Ansatz (7) durch Druckumformen werkstoffeinheitlich einstückig an der Flanschplatte (5) ausgebildet ist, wobei der Ansatz (7) eine Schweißbadstütze (8) oder einen Montagepunkt bildet und der Ansatz (7) eine Höhe (h) zwischen größer oder gleich (≥) 1,0 mm und kleiner oder gleich (≤) 5,0 mm besitzt.

2. Flanschplatte (5) nach Anspruch 1, **dadurch gekennzeichnet , dass** die Innenkontur (12) in Form eines Durchgangs oder eines Lochs im Bereich des Ansatzes (7) der Flanschplatte (5) eingebracht ist.

3. Flanschplatte (5) nach Anspruch 1 oder 2, **dadurch gekennzeichnet, dass** die Flanschplatte (5) aus einem warmgewalzten mikrolegierten Feinkornstahl besteht.

4. Flanschplatte (5) nach einem der Ansprüche 1 bis 3, **dadurch gekennzeichnet , dass** die Flanschplatte (5) eine Mindeststreckgrenze Re von größer oder gleich (≥) 350 MPa besitzt.

5. Verfahren zur Herstellung einer stählernen Flanschplatte (5), welche für eine Verbundlenkerachse (1) oder einen Radträger für ein Kraftfahrzeug vorgesehen ist und die Flanschplatte (5) zumindest einen gegenüber einer Plattenseite (6) vorstehenden Ansatz (7) sowie zumindest einen Stanzabschnitt (10) aufweist, **dadurch gekennzeichnet, dass** der Ansatz (7) an der Flanschplatte (5) in einer Druckumformoperation durch Druckumformen bei einer Druckumformtemperatur (T1) werkstoffeinheitlich einstückig erzeugt wird und der Ansatz (7) eine Schweißbadstütze (8) oder einen Montagepunkt bildet und an der Flanschplatte (5) stanztechnisch eine Außenkontur (11) sowie stanztechnisch eine Innenkontur (12) erzeugt wird, wobei die Stanzabschnitte (10) an der Flanschplatte (5) in einer Stanzoperation durch Stanzen bei einer Stanztemperatur (T2) erzeugt wird, wobei die Druckumformtemperatur (T1) höher ist als die Stanztemperatur (T2).

6. Verfahren zur Herstellung einer Flanschplatte (5), welche für eine Verbundlenkerachse (1) oder einen Radträger für ein Kraftfahrzeug vorgesehen ist und die Flanschplatte (5) zumindest einen gegenüber einer Plattenseite (6) der Flanschplatte (5) vorstehenden Ansatz (7) sowie zumindest einen Stanzabschnitt (10) aufweist, **gekennzeichnet** d u r c h folgende Schritte:
- Bereitstellen einer Platte aus Stahl und Erwärmen der Platte auf eine Druckumformtemperatur (T1) von größer oder gleich (≥) 700 °C;
- Druckumformen der auf Druckumformtemperatur (T1) erwärmen Platte in zumindest einer Druckumformoperation, in welcher eine Plattenseite (6) mit zumindest einem gegenüber der Plattenseite (6) vorstehenden Ansatz (7) ausgebildet wird, wobei der Ansatz (7) werkstoffeinheitlich einstückig durch plastische Verformung an der Platte ausgebildet wird;
- die Platte nach der Druckumformoperation zumindest bereichsweise auf einer Stanztemperatur (T2) unterhalb von 700 °C abgekühlt wird;
bei einer Stanztemperatur (T2) zwischen 450° C und kleiner (<) 700° C in zumindest einer Stanzoperation eine Außenkontur (11) und zumindest eine Innenkontur (12) erzeugt werden.

7. Verfahren nach Anspruch 5, **dadurch gekennzeichnet, dass** die Druckumformtemperatur (T1) zwischen 700 °C und 950 °C, insbesondere zwischen 700 °C und 850 °C, beträgt und die Stanztemperatur (T2)zwischen 450° C und 650° C beträgt.

8. Verfahren nach wenigstens einem der Ansprüche 6 oder 7, **dadurch gekennzeichnet , dass** die Druckumformoperation, eine optionale Kühloperation und die Stanzoperation in einem Folgeverbundwerkzeug durchgeführt werden.

9. Verfahren nach wenigstens einem der Ansprüche 6 bis 8, **dadurch gekennzeichnet , dass** bei einer Stanzoperation eine Innenkontur (12) in Form eines Durchgangs in die Flanschplatte (5) eingebracht wird.

10. Verfahren nach wenigstens einem der Ansprüche 6 bis 9, **dadurch gekennzeichnet, dass** bei einer Stanzoperation ein endformgebender Beschnitt der Flanschplatte (5) durchgeführt wird.
